# EUROPÄISCHE PATENTSCHRIFT

(11) **EP 2 660 607 B1**
(45) Veröffentlichungstag und Bekanntmachung des Hinweises auf die Patenterteilung: **26.12.2018**
(21) Anmeldenummer: 12166413.0
(22) Anmeldetag: 02.05.2012
(51) Int. Cl.: G01N 35/00, G06K 7/10, B01L 3/00

(54) **Identifikation und Lokalisation von Probenbehältern mit RFID-Tags**
Identification and localisation of sample containers with RFID tags
Identification et localisation de récipients d'échantillons dotés de puces RFID

(43) Veröffentlichungstag der Anmeldung: 06.11.2013
(73) Patentinhaber: METROHM AG, 9100 Herisau (CH)
(72) Erfinder: Kirschenbühler, Peter, 9100 Herisau (CH); Müggler, Stefan, 9204 Andwil (CH); Küng, Roland, 8633 Wolfhausen (CH); Jäger, Dominik Hermann, 8500 Frauenfeld (CH)
(74) Vertreter: Hepp Wenger Ryffel AG

(56) Entgegenhaltungen:
- EP-A1- 1 870 834
- WO-A1-02/47015
- WO-A1-2005/098455
- US-A1- 2009 085 752
- US-A1- 2010 123 551

## Beschreibung

Die vorliegende Erfindung betrifft eine Vorrichtung, ein System, ein Verfahren, ein Computerprogramm und einen Datenträger zur Identifikation und Lokalisation von Probenbehältern, welche mindestens einen RFID-Tag aufweisen. Zudem betrifft die Erfindung ein Verfahren zum Umrüsten und/oder Aufrüsten einer Vorrichtung.

Eine gattungsgemässe Vorrichtung ist beispielsweise aus der US 2010/0025464 bekannt. Diese Vorrichtung enthält mehrere Aufnahmen, in die jeweils ein Probenbehälter mit einem RFID-Tag eingesetzt werden kann. Mit Hilfe einer Leseeinrichtung können die RFID-Tags ausgelesen werden. Hierfür muss allerdings die Leseeinrichtung an dem Probenrack entlang geführt oder alternativ das Probenrack gegenüber der Leseeinrichtung bewegt werden. Dieses Verfahren ist aufgrund der vielen erforderlichen Bewegungen sowohl mechanisch als auch zeitlich aufwendig. Zudem müssen die einzelnen Positionen der Probenbehälter in dem Probenrack mit Hilfe von Positionssensoren bestimmt werden, was ebenfalls baulich sehr aufwendig ist.

Eine ähnliche Vorrichtung offenbart die US 2006/0213964. Bei dieser Vorrichtung ist eine Leseeinrichtung an einem Roboterarm angeordnet, mit dem zugleich Substanzen in die Probenbehälter eingefüllt oder aus diesen entnommen werden können. Auch dieses Verfahren ist jedoch baulich und zeitlich aufwendig, da jeder Probenbehälter einzeln mit dem Roboterarm angesteuert werden muss, um sämtliche Probenbehälter zu identifizieren.

Des Weiteren ist es beispielsweise aus der EP 2 081 128 bekannt, an jeder einzelnen Aufnahme eine oder mehrere Leseantennen anzuordnen. Diese Leseantennen können direkt beim Einsetzen des Probenbehälters in die Aufnahme den daran angebrachten RFID-Tag identifizieren. Hierdurch kann zwar auf Relativbewegungen zwischen Leseantenne und RFID-Tag verzichtet werden. Allerdings ist bei diesem Aufbau eine sehr grosse Anzahl von Leseantennen und zugehörigen Zuleitungen erforderlich. Beispielsweise sind bei einer Anordnung der Aufnahmen in einem rechteckigen Raster mit M Zeilen und N Spalten mindestens MxN Leseantennen nötig. Zudem wird für jede Leseantenne ein separates Anpassnetzwerk nötig, um die Leseantenne bei der Abfragefrequenz resonant zu machen und die Impedanz der Leseantenne auf diejenige der Leseeinrichtung anzupassen. Solche Anpassnetzwerke und ihre Dimensionierung sind dem Fachmann an sich bekannt.

Auch die weiteren Dokumente EP 1 793 326, US 6,392,544 und US 7,319,398 offenbaren Vorrichtungen, bei denen jeder Aufnahme oder zu lokalisierenden Position eine separate Lesenantenne zugeordnet ist. Hieraus ergeben sich ähnliche Nachteile wie oben erläutert.

Es ist daher eine Aufgabe der vorliegenden Erfindung, eine Vorrichtung, ein System und ein Verfahren zur Identifikation und Lokalisation von Probenbehältern bereitzustellen, welche diese Nachteile nicht aufweisen. Unter anderem soll die Vorrichtung also baulich möglichst einfach sein und insbesondere möglichst wenige Leseantennen und zu bewegende Komponenten enthalten. Zudem soll die Vorrichtung eine möglichst schnelle und sichere Identifikation und Lokalisation von Probenbehältern erlauben.

Diese Aufgabe wird einerseits durch eine erfindungsgemässe Vorrichtung zur Identifikation und Lokalisation von Probenbehältern gelöst. Die Probenbehälter weisen jeweils mindestens einen RFID-Tag auf. Die Vorrichtung umfasst mehrere Aufnahmen zur Aufnahme jeweils eines Probenbehälters. Die Aufnahmen können beispielsweise in einem Probenrack enthalten sein.

Weiterhin um fasst die Vorrichtung mehrere Leseantennen zum Auslesen eines RFID-Tags eines Probenbehälters, der in einer der Aufnahmen aufgenommen ist. Auch die Leseantennen können Teil eines Probenracks sein, welches die Aufnahmen enthält. Diese Leseantennen sind wahlweise mit mindestens einer Leseeinrichtung derart verbindbar, dass ein RFID-Tag mittels der Leseeinrichtung und der Leseantenne auslesbar, identifizierbar und lokalisierbar ist. Bevorzugt umfasst die Vorrichtung diese mindestens eine Leseeinrichtung. Es ist jedoch auch denkbar und liegt im Rahmen der Erfindung, dass die Vorrichtung lediglich Anschlüsse enthält, über die die Leseantennen mit einer externen Leseeinrichtung verbindbar sind.

Kombinationen aus Leseeinrichtungen und Leseantennen, mit denen ein oder mehrere RFID-Tags auslesbar, identifizierbar und lokalisierbar sind, sind dem Fachmann an sich bekannt. Insbesondere sind Verfahren zur Auflösung von Kollisionen bekannt, welche entstehen können, sobald mehrere RFID-Tags von einer Leseantenne zeitgleich angeregt, also mit Energie versorgt und abgefragt werden. Beispiele solcher Antikollisionsalgorithmen sind im Standard ISO/IEC-15693-3:2009 und EPC™ Radio-Frequency Identity Protocols Class-1 Generation-2 UHF RFID Protocol for Communications at 860 MHz - 960 MHz Version 1.0.9:2005 beschrieben. Die bekannten Antikollisionsalgorithmen erlauben es aber nur, sämtliche sich im Feld einer Leseantenne befindenden RFID-Tags zu identifizieren, nicht jedoch eine auch irgendwie geartete Information bezüglich dessen Position im Feld einer Lesenantenne.

Die Leseeinrichtung kann optional auch dafür ausgelegt sein, zusammen mit den Leseantennen Daten auf einen RFID-Tag zu schreiben; auch eine solche Einrichtung wird im Rahmen der Erfindung als Leseeinrichtung bezeichnet.

Unter der Identifizierung eines RFID-Tags wird hier und im Folgenden verstanden, dass eine den RFID-Tag kennzeichnende Eigenschaft festgestellt wird. Bei dieser Eigenschaft kann es sich beispielsweise um eine insbesondere eindeutige Seriennummer handeln, die dem RFID-Tag bei seiner Herstellung einprogrammiert wurde. Alternativ kann der RFID-Tag auch eine andere Information enthalten, die ihm vor dem Einsetzen des Probenbehälters einprogrammiert wurde und die enthaltene Probe eindeutig charakterisiert, wie zum Beispiel den Electronic Product Code (EPC). Mittels der Identifizierung eines RFID-Tags kann auch der Probenbehälter identifiziert werden, welcher diesen RFID-Tag enthält.

Jeder Aufnahme sind Werte von mindestens zwei Koordinaten zugeordnet. Falls die Aufnahmen beispielsweise in einem rechteckigen Raster angeordnet sind, so kann eine erste Koordinate die Spalte und eine zweite Koordinate die Zeile in diesem Raster angeben. Die möglichen Werte der ersten Koordinate können dann beispielsweise 1 (für die erste Spalte), 2 (für die zweite Spalte) usw. sein. Entsprechendes gilt für eine zweite Koordinate. Diese beiden Koordinaten bilden also kartesische Koordinaten.

Die Zuordnung ist derart, dass die Werte der Koordinaten die Aufnahmen eindeutig kennzeichnen. Dies bedeutet also, dass sich zwei verschiedene Aufnahmen in mindestens einem Wert einer Koordinate unterscheiden. So kann etwa eine erste Aufnahme im Schnittpunkt der zweiten Zeile und der dritten Spalte angeordnet sein und eine zweite Aufnahme im Schnittpunkt der zweiten Zeile und der fünften Spalte.

Es ist jedoch nicht zwingend, dass zu jedem Paar von Werten möglicher Koordinaten auch eine zugehörige Aufnahme existiert. Beispielsweise kann ein rechteckiges Raster mit fünf Zeilen und fünf Spalten aus baulichen Gründen im Mittelpunkt keine Aufnahme enthalten. In diesem Falle liegt am Schnittpunkt der dritten Zeile mit der dritten Spalte keine Aufnahme vor.

Erfindungsgemäss ist jedem Wert jeder der Koordinaten mindestens eine Leseantenne zugeordnet. Diese Zuordnung bedeutet dabei, dass mittels dieser Leseantenne die RFID-Tags der Probenbehälter derjenigen Aufnahmen auslesbar sind, denen dieser Wert dieser Koordinate zugeordnet ist. Auf diese Weise ist auch die Leseantenne einer oder mehreren Aufnahmen zugeordnet.

Im Beispiel eines rechteckigen Rasters mit fünf Zeilen und fünf Spalten bedeutet dies, dass jeder Zeilenkoordinate (Zeile 1, Zeile 2, ..., Zeile 5) mindestens eine Leseantenne zugeordnet ist. Mit Hilfe dieser Leseantenne sind die RFID-Tags der Probenbehälter derjenigen Aufnahmen auslesbar, die sich in der entsprechenden Zeile befinden. So umfasst die Vorrichtung in diesem Beispiel also eine Leseantenne für die erste Zeile, eine Leseantenne für die zweite Zeile etc. Ausserdem umfasst die Vorrichtung in diesem Beispiel für jede Spalte jeweils mindestens eine Leseantenne.

Durch diese erfindungsgemässe Anordnung kann die Anzahl der Leseantennen deutlich reduziert werden. Enthält die Vorrichtung beispielsweise Aufnahmen, die in einem rechteckigen Raster mit M Zeilen und N Spalten angeordnet sind, so sind für die MxN Aufnahmen lediglich M+N Leseantennen erforderlich. Entsprechend kann die Anzahl der erforderlichen Zuleitungen und Anpassnetzwerke reduziert werden. Zudem besteht keine Notwendigkeit für bewegliche Komponenten, was die Vorrichtung deutlich weniger störanfällig macht und das damit betriebene Verfahren deutlich schneller. Des Weiteren reduziert sich die Abfragezeit entsprechend von MxN Zyklen auf M+N Zyklen. Dennoch ist es möglich, mit dieser Vorrichtung die Probenbehälter eindeutig den Aufnahmen zuzuordnen und damit zu lokalisieren, in denen sie aufgenommen sind. Dies wird weiter unten im Zusammenhang mit dem erfindungsgemässen Verfahren beschrieben.

Bevorzugt kann jedem Wert einer ersten Koordinate mindestens eine erste Leseantenne und jedem Wert einer zweiten Koordinate mindestens eine zweite Leseantenne zugeordnet sein.

Insbesondere kann jede der Koordinaten mindestens zwei, insbesondere mindestens drei, insbesondere mindestens fünf und insbesondere mindestens sieben verschiedene Werte annehmen. Je grösser die Anzahl der möglichen Werte jeder der Koordinaten ist, desto geringer wird bei vorgegebener Anzahl von Aufnahmen die Anzahl der erforderlichen Leseantennen. Soll die Vorrichtung beispielsweise 24 Aufnahmen enthalten, so sind im Falle von 2 Zeilen und 12 Spalten insgesamt 2+12=14 Leseantennen nötig. Im Falle von 4 Zeilen und 6 Spalten sind hingegen nur 4+6=10 Leseantennen erforderlich.

Besonders vorteilhaft ist es, wenn jede der Koordinaten die gleiche Anzahl verschiedener Werte annehmen kann. Hierdurch kann eine sehr kleine Anzahl von Leseantennen (bezogen auf die Gesamtanzahl der Aufnahmen) erreicht werden. Beispielsweise sind für 36 Aufnahmen in einem rechteckigen Raster mit 3 Zeilen und 12 Spalten 3+12=15 Leseantennen nötig; eine Anordnung in 6 Zeilen und 6 Spalten erfordert hingegen nur 6+6=12 Leseantennen.

Prinzipiell ist es denkbar, dass einem Wert einer Koordinate mehrere Leseantennen zugeordnet sind. So kann beispielsweise das Auslesen einer Zeile in einem rechteckigen Raster mit mehreren Leseantennen gleichzeitig oder nacheinander erfolgen, die alle dieser Zeile zugeordnet sind.

Es ist bevorzugt, wenn mindestens einem Wert einer der Koordinaten und bevorzugt jedem Wert jeder der Koordinaten genau eine Leseantenne zugeordnet ist. Auf diese Weise kann die Gesamtanzahl der Leseantennen klein gehalten werden, was zu einer besonderen baulichen Einfachheit führt.

Alternativ zu einem rechteckigen Raster können die Aufnahmen beispielsweise auf mehreren konzentrischen Kreisen angeordnet sein. Eine erste Koordinate kann dann den Radius des Kreises angeben, und eine zweite Koordinate kann einen Winkel in Umfangsrichtung charakterisieren.

In vorteilhaften Ausführungsformen weist mindestens eine und weisen bevorzugt mehrere, besonders bevorzugt alle Leseantennen mehrere in Serie geschaltete Leiterschleifen auf. Jede dieser Leiterschleifen ist dabei einer Aufnahme zugeordnet. Dass eine Leiterschleife einer Aufnahme zugeordnet ist, bedeutet dabei, dass diese Leiterschleife derart angeordnet ist, dass das hiermit erzeugte Magnetfeld geeignet ist, den RFID-Tag eines in dieser Aufnahme aufgenommenen Probenbehälters auszulesen. Mit Hilfe einer Leiterschleife kann die Stärke des Magnetfeldes im Bereich der Aufnahme lokal erhöht werden, was das Auslesen des RFID-Tags vereinfacht. Bevorzugt ist jeder Aufnahme, die der Leseantennen zugeordnet ist, auch eine Leiterschleife dieser Leseantennen zugeordnet. Auf dieses Weise können alle diese Aufnahmen einfach ausgelesen werden.

Eine besonders einfache bauliche Ausgestaltung ergibt sich, wenn die einer ersten Koordinate zugeordneten Leseantennen im Wesentlichen in einer ersten Ebene der Vorrichtung angeordnet sind und die einer zweiten Koordinate zugeordneten Leseantennen im Wesentlichen in einer zweiten Ebene angeordnet sind, welche im Wesentlichen parallel zur ersten Ebene verläuft. Insbesondere können die einer ersten Koordinate zugeordneten Leseantennen in einer ersten Platine angeordnet sein und die einer zweiten Koordinate zugeordnete Leseantennen in einer zweiten Platine, welche parallel zur ersten Platine verläuft. Die beiden Ebenen können alternativ auch auf der Ober- bzw. Unterseite einer doppelseitig kaschierten Platine aufgebracht sein. Beide Bauformen sind sehr Platz sparend und Kosten sparend.

Insbesondere beim Vorliegen von Leiterschleifen sind Kreuzungspunkte der Leseantennen in der Regel nicht zu vermeiden. An diesen Kreuzungspunkten müssen die Abschnitte der Leseantenne übereinander hinweg geführt werden, sodass kein elektrischer Kontakt zwischen verschiedenen Stellen der Leseantenne entsteht. Die Formulierung "im Wesentlichen in einer Ebene" umfasst auch Leseantennen, welche derartige Kreuzungspunkte enthalten. Solche Kreuzungspunkte lassen sich einfach mit Hilfe von Durchplatierungen herstellen, welche aus dem Stand der Technik an sich bekannt sind.

Vorteilhafterweise sind die Leseantennen, insbesondere die die Leseantennen enthaltenden Platinen, in einer Antennenplatte angeordnet. Dies ergibt eine kleine Bauform. Bevorzugt enthält die Antennenplatte eine Grundplatte und eine Deckplatte, zwischen denen die Leseantennen, insbesondere die die Leseantennen enthaltende(n) Platine(n), eingeschlossen sind.

In einigen Ausführungsformen ist die Antennenplatte als Bodenplatte ausgebildet, welche unterhalb der Aufnahmen angeordnet ist, insbesondere unterhalb eines die Aufnahmen enthaltenden Probenracks. Dies ist besonders dann vorteilhaft, wenn die RFID-Tags an der Unterseite der Probenbehälter angeordnet sind. In einigen Varianten können die Probenbehälter auf die Bodenplatte aufsetzbar sein. Auf diese Weise kann die Bodenplatte gleichzeitig die Probenbehälter stützen. In anderen Varianten kann die Bodenplatte auch so angeordnet sein, dass die Probenbehälter oberhalb der Bodenplatte anordenbar sind, ohne diese zu berühren.

Alternativ oder zusätzlich kann die Antennenplatte als Lochplatte ausgebildet sein. Diese Lochplatte weist mehrere Löcher auf, die jeweils zumindest einen Teil der Aufnahme bilden und in welche jeweils ein Probenbehälter einsetzbar ist. In diesem Fall ist die Lochplatte selbst ein Teil eines Probenracks. Eine solche Anordnung ist dann besonders bevorzugt, wenn die RFID-Tags an den Seiten der Probenbehälter angeordnet sind.

Besonders bevorzugt ist es in diesem Falle, wenn mindestens eine und bevorzugt alle in der Lochplatte enthaltenen Leseantennen Leiterschleifen enthalten, welche die Löcher umschliessen. Hierdurch kann ein grösseres und räumlich besser begrenztes, für alle Löcher etwa gleich starkes Magnetfeld erzeugt werden, da der Abstand der Leiterschleife zum Loch für die Probenbehälter für alle Löcher gleich gross ausfällt.

Zur Anpassung der Impedanz zwischen der Leseeinrichtung und den Leseantennen wird bevorzugt ein Anpassnetzwerk verwendet. Derartige Anpassnetzwerke sind dem Fachmann an sich bekannt und zumindest in den meisten Fällen unerlässlich, um die Leseantennen resonant zu machen und den notwendigen durch eine Leiterschleife fliessenden Strom von der Quelle im Lesegerät zur Leseantenne zu bringen. Besonders wenn die Leseantennen vom Lesegerät etwas abgesetzt sind, ist die Anpassung an eine Leitungsimpedanz der verbindenden Zuleitung (zum Beispiel 50 Ohm) vorteilhaft.

Im Rahmen der vorliegenden Erfindung hat es sich als besonders günstig erwiesen, wenn die Leseeinrichtung mit mindestens einer, bevorzugt mit jeder Leseantenne über ein jeweiliges Anpassnetzwerk verbunden oder verbindbar ist. Dieses Anpassnetzwerk enthält in einer vorteilhaften Ausführungsform:
- einen ersten Kondensator, welcher in Serie zwischen der Leseeinrichtung und der Leseantenne angeordnet ist, und
- einen zweiten Kondensator, welcher parallel zur Leseeinrichtung und Leseantenne angeordnet ist.

In einer ersten Variante kann der zweite Kondensator zwischen der Leseeinrichtung und dem ersten Kondensator angeordnet sein. Alternativ kann der zweite Kondensator in einer zweiten Variante zwischen dem ersten Kondensator und der Leseantenne angeordnet sein.

In beiden Varianten dienen die beiden Kondensatoren der Transformation der Impedanz der Leiterschleife auf die Impedanz der Leseeinrichtung bei der Auslesefrequenz, bevorzugt 50 Ohm. Diese Art der resonanten Anpassung ist dem Fachmann an sich bekannt. Die Induktivität der Leseantenne wird hierdurch kompensiert und die ohmsche Restimpedanz transformiert.

Bevorzugt ist zwischen der Leseeinrichtung und mindestens einer, bevorzugt mit jeder Leseantenne ein jeweiliger erster Schalter angeordnet. Die ersten Schalter dienen dazu, die Leseantennen jeweils einzeln und bevorzugt sequenziell mit der Leseeinrichtung zu verbinden. Die ersten Schalter können in Serie zwischen der Leseeinrichtung und dem Anpassnetz angeordnet sein.

Ebenfalls bevorzugt ist zwischen dem zweiten Kondensator und der Leseantenne ein zweiter Schalter angeordnet. Mit Hilfe der jeweiligen zweiten Schalter kann die Induktionsschleife, in der die Leseantenne enthalten ist, geöffnet werden. Dies ist erforderlich, um unerwünschte Induktionseffekte zu verhindern. Beispielsweise sollte beim Auslesen mittels einer ersten Leseantenne der zweite Schalter des Anpassnetzwerke einer zweiten Leseantenne geöffnet sein, damit in der zweiten Leseantenne keine Induktionsströme fliessen, die ihrerseits ein Magnetfeld erzeugen und dadurch das Auslesen mittels der ersten Leseantenne stören könnten.

Der zweite Schalter kann in Serie zwischen dem Anpassnetzwerk und der Leseantenne angeordnet sein. Alternativ kann er für das Anpassnetzwerk in der oben genannten zweiten vorteilhaften Variante auch Teil des Anpassnetzwerks sein und zwischen dem zweiten Kondensator und der Leseantenne angeordnet sein. Besonders bevorzugt sollte die Leseantenne bei geöffnetem Schalter keinen durch irgendwelche Bauelemente geschlossenen Stromkreis aufweisen.

Falls ein erster Schalter und ein zweiter Schalter vorhanden sind, ist es besonders günstig, wenn der erste Schalter und der zweite Schalter ein und desselben Anpassnetzwerks synchron betätigbar sind. Wenn also beispielsweise der erste Schalter eines ersten Anpassnetzwerks geöffnet wird, um das Auslesen mit der ersten Leseantenne zu beenden, kann gleichzeitig auch der zweite Schalter des ersten Anpassnetzwerkes geöffnet werden, um das Entstehen von Induktionsströmen in der ersten Leseantenne zu verhindern.

Ohne weitere Massnahmen kann es passieren (verursacht durch die Güte des Resonanzkreises, aus der Leseantenne und dem Anpassnetzwerk gebildet ist), dass die Spannungen am zweiten Schalter, welcher direkt in Serie zur Leseantenne angebracht ist, derart gross werden, dass sie dessen Speisespannung überschreiten und dieser nicht mehr wie vorgesehen arbeitet. Zur Behebung dieses Problems kann das Anpassnetzwerk der oben genannten zweiten vorteilhaften Variante eingesetzt werden und der zweite Schalter vorteilhaft zwischen dem in Serie geschalteten ersten Kondensator und dem parallel geschalteten zweiten Kondensator angeordnet sein. Mit Hilfe dieses Platztausches von erstem Kondensator und zweitem Schalter kann die Spannung am zweiten Schalter reduziert werden, was dessen Funktionsfähigkeit garantiert. Jeweils nur die eine Leseantenne wird mit der Leseeinrichtung verbunden, welche eine Abfrage der Aufnahmen in ihrem Lesebereich durchzuführen hat.

Ein wie oben beschriebenes Anpassnetzwerk mit Schaltern führt zu geöffneten Stromkreisen aller nicht abgefragten Leseantennen und damit zu einer Unterdrückung des Magnetfeldes in jeweils räumlich benachbarten Aufnahmen dieser aller nicht abgefragten Leseantennen. Hierdurch werden mit grösserer Zuverlässigkeit nur die RFID-Tags an denjenigen Probenbehältern erfasst, die in den Aufnahmen aufgenommen sind, denen die abfragende Leseantenne zugeordnet ist. Dieser Prozess wird sequentiell für alle abfragenden Leseantennen durchgeführt.

Die Dimensionierung der Kapazitäten der beiden Kondensatoren ist dem Fachmann bekannt oder kann zumindest durch Routineversuche ermittelt werden. Auch geeignete elektronische Schalter für analoge Signale sind dem Fachmann an sich bekannt.

Ein weiterer Aspekt der Erfindung betrifft ein System zur Identifikation und Lokalisation von Probenbehältern, welche mindestens einen RFID-Tag aufweisen. Ein solches System umfasst mindestens eine wie oben beschriebene Vorrichtung und mindestens einen Probenbehälter. Dabei weist dieser Probenbehälter mindestens einen RFID-Tag auf und ist derart in einer Aufnahme der Vorrichtung aufnehmbar, dass der RFID-Tag mittels der Leseeinrichtung und mindestens einer der Leseantennen auslesbar, identifizierbar und lokalisierbar ist. Insbesondere ist der RFID-Tag derart am Probenbehälter angeordnet, dass er von der Vorrichtung auslesbar ist, wenn der Probenbehälter in der Aufnahme aufgenommen ist.

Des Weiteren betrifft die Erfindung ein Verfahren zur Identifikation und Lokalisation von Probenbehältern, welche mindestens einen RFID-Tag aufweisen. Dieses Verfahren wird unter Verwendung einer wie oben beschriebenen Vorrichtung durchgeführt und enthält die folgenden Schritte:
a. Bereitstellung mindestens eines Probenbehälters, welcher mindestens einen RFID-Tag aufweist, in eine Aufnahme der Vorrichtung;
b. sequenzielle Verbindung der Leseeinrichtung mit jeder Leseantenne und jeweils
   b.i. mittels der Leseeinrichtung und dieser Leseantenne: Auslesen und Identifizieren derjenigen RFID-Tags, welche dieser Leseantenne zugeordnet sind;
   b.ii. Zuordnung der Identifizierungen dieser RFID-Tags zu dem Wert der Koordinate, dem diese Leseantenne zugeordnet ist;
c. Lokalisation mindestens eines der Probenbehälter durch Bestimmung der Werte der Koordinaten (x, y), denen die Identifizierung der RFID-Tags (3) des Probenbehälters (2) zugeordnet wurde.

Die Bereitstellung im Schritt a. kann beispielsweise dadurch erfolgen, dass die Probenbehälter in die Aufnahmen eingesetzt werden. Die Probenbehälter können aber auch bereits zum Beginn des Verfahrens in den Aufnahmen aufgenommen sein.

Im Schritt b. werden die Leseantennen also sequenziell mit der Leseeinrichtung verbunden. Dies kann beispielsweise mit Hilfe der jeweiligen ersten Schalter der oben beschriebenen Anpassnetzwerke erfolgen. Für jede der Leseantennen werden anschliessend in einem ersten Teilschritt b.i. diejenigen RFID-Tags ausgelesen, welche dieser Leseantenne zugeordnet sind. In der Regel müssen hierfür mehrere RFID-Tags ausgelesen und identifiziert werden, sofern die Leseantenne mehreren Aufnahmen zugeordnet ist. Sind beispielsweise in der zweiten Zeile eines rechteckigen Rasters drei Probenbehälter mit jeweils einem RFID-Tag eingesetzt, so müssen diese alle ausgelesen und identifiziert werden.

Zu diesem Zweck sind dem Fachmann so genannte Antikollisionsmechanismen an sich bekannt. Beispielsweise können gemäss dem Standard ISO/IEC-15693-3:2009 die RFID-Tags anhand einer eindeutigen 64-Bit-Seriennummer einzeln angesprochen. Alternativ dazu kann beispielsweise gemäss dem Modus 3 des Standards ISO/IEC 18000-3:2010 oder nach EPC™ Radio-Frequency Identity Protocols Class-1 Generation-2 UHF RFID Protocol for Communications at 860 MHz - 960 MHz Version 1.0.9:2005 jeder RFID-Tag eine 32-Bit-Zufallszahl erzeugen, anhand welcher sich die Kollisionen auflösen lassen und die RFID-Tags nacheinander ausgelesen und auf Grund des EPC identifiziert werden können. Diese Verfahren sind dem Fachmann an sich bekannt und bedürfen daher hier keiner weiteren Erläuterung.

In einem weiteren Teilschritt b.ii. werden die Identifizierungen dieser RFID-Tags dem Wert der Koordinate zugeordnet, dem die Leseantenne zugeordnet ist. Werden also beispielsweise mit der Leseantenne, die der Zeile 2 zugeordnet ist, RFID-Tags mit den Identifizierungen 123, 456 und 789 zugeordnet, so werden diese Identifizierungen 123, 456 und 789 der Zeile 2 zugeordnet.

Schliesslich erfolgt im Schritt c. die Lokalisation mindestens eines der Probenbehälter. Wurde also in Weiterführung des obigen Beispiels die Identifizierung 123 sowohl mit der Leseantenne zur Zeile 2 als auch mit der Leseantenne zur Spalte 3 identifiziert, so befindet sich der Probenbehälter mit diesem RFID-Tag an der (eindeutig festgelegten) Aufnahme im Schnittpunkt der Zeile 2 mit der Spalte 3.

Ein weiterer Aspekt der Erfindung ist auf ein Verfahren zum Umrüsten und/oder Aufrüsten einer Vorrichtung gerichtet, welche mehrere Aufnahmen zur Aufnahme jeweils eines Probenbehälters umfasst, nicht jedoch auch zwingend Leseantennen. Das Verfahren enthält einen Schritt, in dem die Vorrichtung derart mit mehreren Leseantennen zum Auslesen eines RFID-Tags eines Probenbehälters ausgestattet wird, dass sich eine erfindungsgemässe Vorrichtung ergibt. Dies bedeutet also, dass die Leseantennen der umgerüsteten oder aufgerüsteten Vorrichtung wahlweise mit mindestens einer Leseeinrichtung derart verbindbar sind, dass ein RFID-Tag mittels der Leseeinrichtung und dieser Leseantenne auslesbar, identifizierbar und lokalisierbar ist. Zudem sollen jeder Aufnahme Werte von mindestens zwei Koordinaten zugeordnet sein oder zugeordnet werden, welche die Aufnahmen eindeutig kennzeichnen. Ausserdem soll jedem Wert jeder der Koordinaten mindestens eine Leseantenne zugeordnet sein oder zugeordnet werden, mittels welcher die RFID-Tags der Probenbehälter der Aufnahmen auslesbar sind, denen dieser Wert dieser Koordinate zugeordnet ist. Mit diesem Verfahren kann also eine bereits bestehende Vorrichtung derart umgerüstet oder aufgerüstet werden, dass eine erfindungsgemässe Vorrichtung mit den oben beschriebenen Vorteilen entsteht, mit der das oben beschriebene erfindungsgemässe Verfahren zur Identifikation und Lokalisation durchgeführt werden kann.

Insbesondere kann eine Vorrichtung mit einem Probenrack dadurch umgerüstet werden, dass dieses Probenrack durch ein Probenrack ersetzt wird, welches eine wie oben beschriebene Anordnung von Leseantennen enthält. Eine Vorrichtung kann dadurch aufgerüstet werden, dass sie mit einem Probenrack ausgestattet wird, welches eine wie oben beschriebene Anordnung von Leseantennen enthält.

Bevorzugt ist die Vorrichtung, insbesondere ihre Leseeinrichtung, derart programmiert, dass sie ein wie oben beschriebenes erfindungsgemässes Verfahren durchführen kann, insbesondere das Auslesen, Identifizieren und Lokalisieren unter Verwendung eines Antikollisionsmechanismus. Alternativ ist es aber auch möglich, dass die Vorrichtung, insbesondere ihre Leseeinrichtung, vom Benutzer zur Durchführung dieses Verfahrens programmiert wird. Ein weiterer Aspekt der Erfindung ist daher ein Computerprogramm, welches zur Durchführung eines wie oben beschriebenen Verfahrens ausgebildet ist, wenn es von einer wie oben beschriebenen Vorrichtung durchgeführt wird, insbesondere von der Leseeinrichtung der Vorrichtung. Noch ein Aspekt der Erfindung ist auf einen Datenträger gerichtet, welcher ein solches Computerprogramm enthält.

Im Folgenden wird die Erfindung anhand von Ausführungsbeispielen und Zeichnungen näher erläutert. Dabei zeigen:
- Figur 1:: eine perspektivische Explosionsdarstellung einer Antennenplatte einer erfindungsgemässen Vorrichtung;
- Figur 2:: eine schematische Darstellung einer Leseantenne;
- Figur 3:: eine seitliche Ansicht eines ersten erfindungsgemässen Ausführungsbeispiels einer Vorrichtung mit einer Antennenplatte gemäss Figur 1 in Form einer Bodenplatte;
- Figur 4:: eine seitliche Ansicht eines zweiten erfindungsgemässen Ausführungsbeispiels einer Vorrichtung mit einer Antennenplatte in Form einer Lochplatte;
- Figur 5:: ein Flussdiagramm zum erfindungsgemässen Verfahren;
- Figur 6:: einen ersten Schaltplan mit drei Anpassnetzwerken in Serie-Parallelschaltung;
- Figur 7:: einen zweiten Schaltplan mit einem Anpassnetzwerk in Parallel-Serieschaltung;
- Figur 8:: einen dritten Schaltplan mit einem Anpassnetzwerk in Parallel-Serieschaltung mit umplatziertem zweitem Schalter.

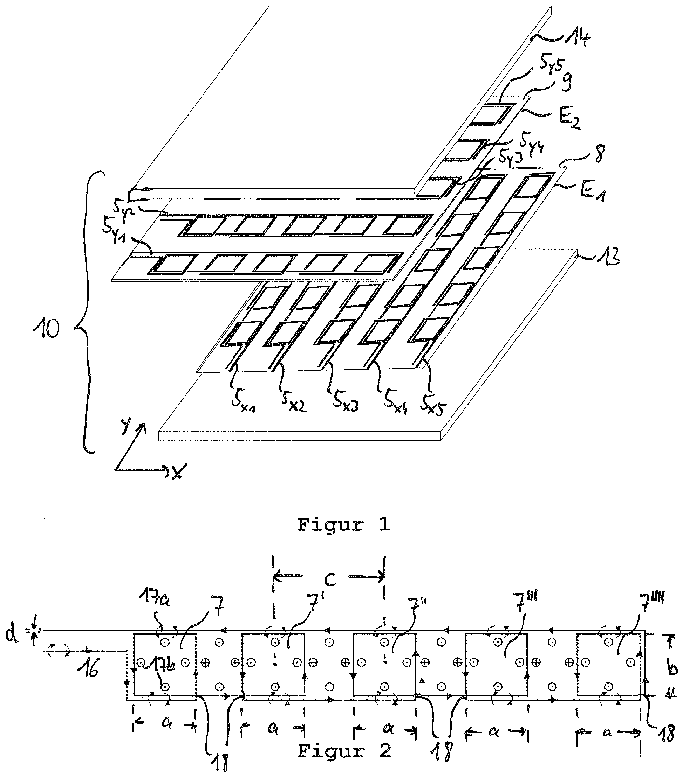

Figur 1 zeigt eine Antennenplatte einer erfindungsgemässen Vorrichtung. Diese Antennenplatte ist als Bodenplatte 10 ausgebildet und enthält eine Grundplatte 13, eine erste Platine 8, eine zweite Platine 9 sowie eine Deckplatte 14. Dabei ist die erste Platine 8 in einer ersten Ebene E₁ angeordnet und die zweite Platine 9 in einer dazu parallelen zweiten Ebene E₂. Die Platinen 8 und 9 können beispielsweise nach dem Standard FR4 gefertigt sein und eine Dicke von 1,5 mm aufweisen. Alternativ und vorteilhaft kann eine beidseitig kaschierte Platine verwendet werden, so dass die Ebenen E₁ und E₂ durch das Trägermaterial der Leiterplatte getrennt sind. Solche beidseitig kaschierten Platinen sind dem Fachmann an sich bekannt. Die Grundplatte 13 und die Deckplatte 14 können beispielsweise aus FR4 oder jedem anderem geeigneten Platinenmaterial bestehen. In dem hier dargestellten Ausführungsbeispiel sind sowohl die Grundplatte 13 als auch die Deckplatte 14 quadratisch und können Seitenlängen von beispielsweise 30 cm aufweisen. Selbstverständlich ist es auch denkbar und liegt im Rahmen der Erfindung, dass die Grundplatte 13 und die Deckplatte 14 andere Dimensionen haben und nicht quadratisch sind.

Die erste Platine 8 enthält fünf Leseantennen 5ₓ₁, 5ₓ₂, 5ₓ₃, 5ₓ₄ und 5ₓ₅. Jede dieser fünf Leseantennen ist einem Wert x1 = 1, x2 = 2, x3 = 3, x4 = 4 bzw. x5 = 5 einer Koordinate x zugeordnet. Dabei ist eine erste Leiterschleife dem Wert x1 = 1 der Koordinate x zugeordnet, eine zweite Leiterschleife dem Wert x2 = 2 usw. Entsprechend enthält die zweite Platine 9 fünf Leseantennen 5_{y1}, 5_{y2}, 5_{y3}, 5_{y4} und 5_{y5}, welche den fünf Werten y1 = 1, y2 = 2, y3 = 3, y4 = 4 bzw. y5=5 einer Koordinate y zugeordnet sind. Insgesamt ist damit jedem der zehn Koordinatenwerte genau eine der Leseantennen 5ₓ₁, 5ₓ₂, 5ₓ₃, 5ₓ₄, 5ₓ₅, 5_{y1}, 5_{y2}, 5_{y3}, 5_{y4} und 5_{y5} zugeordnet. Die Koordinaten x und y bilden zusammen kartesische Koordinaten.

Figur 2 zeigt einen Ausschnitt der ersten Platine 8, welche die Leseantenne 5ₓ₁ enthält. Die weiteren Leseantennen 5ₓ₂, 5ₓ₃, 5ₓ₄ und 5ₓ₅ der ersten Platine 8 sowie die Leseantennen 5_{y1}, 5_{y2}, 5_{y3}, 5_{y4} und 5_{y5} der zweiten Platine 9 haben bevorzugt die gleiche Form wie die Leseantenne 5ₓ₁; ihre Form kann jedoch auch hiervon abweichen. Die Leseantenne 5ₓ₁ enthält fünf in Serie geschaltete Leiterschleifen 7, 7', 7", 7"' und 7"". Die Anzahl 5 dieser Leiterschleifen entspricht dabei der Anzahl der Werte der Koordinate y.

Die fünf Leiterschleifen 7, 7', 7", 7"' und 7"" sind im Wesentlichen rechteckig ausgebildet und haben in dem hier dargestellten Ausführungsbeispiel eine Länge von a = 18 mm und eine Breite b = 18 mm. Der Abstand der Mittelpunkte zwischen benachbarten Leiterschleifen 7 beträgt jeweils c = 26 mm. Diese Dimensionen sind nicht kritisch und erlauben es, dass die zwischen den Leiterschleifen verschiedener Leseantennen auftretenden wechselseitigen Induktionen derart gering sind, dass sie das unten erläuterte Auslesen der RFID-Tags nicht stören.

Durch die Leseantenne 5ₓ₁ kann ein elektrischer Strom geleitet werden, dessen Stromrichtung durch die Pfeile 16 visualisiert ist. Jede Leiterschleife 7, 7', 7", 7"' und 7"" enthält einen jeweiligen Kreuzungspunkt 18, an dem die Abschnitte der Leseantenne 5ₓ₁ übereinander hinweg geführt sind, so dass hier kein elektrischer Kontakt entsteht. In an sich bekannter Weise erzeugt jede Leiterschleife 7, 7', 7", 7"' und 7"" in ihrem Innern ein sich verstärkendes räumlich begrenztes Magnetfeld, welches schematisch durch die Pfeile 17a und Vektorenden 17b dargestellt ist. In den Zwischenräumen kompensieren sich Teile der Magnetfeldvektoren einzelner Leiterabschnitte.

Wie an Figur 1 gut zu erkennen ist, liegt jeweils eine Leiterschleife der ersten Platine 8 unterhalb einer entsprechenden Leiterschleife der zweiten Platine 9. Einem solchen Paar von Leiterschleifen ist auf diese Weise ein Paar von Koordinatenwerten zugeordnet. So liegt beispielsweise die in Figur 1 am weitesten vorne dargestellte Leiterschleife der Leseantenne 5_{y1} oberhalb der am weitesten rechts dargestellten Leiterschleife der Leseantenne 5ₓ₅. Diesen beiden Leseantennen 5ₓ₅ und 5_{y1} sind daher die Koordinatenwerte x = x5 = 5 und y = y1 = 1 zugeordnet.

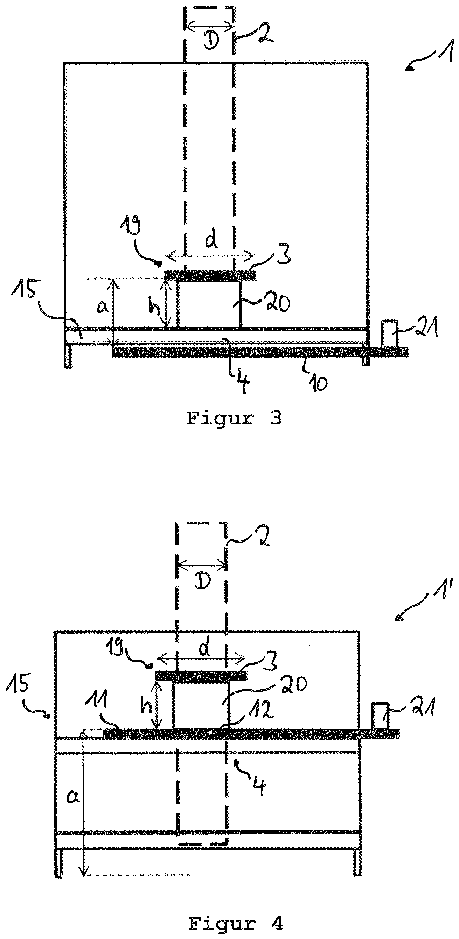

In Figur 3 ist eine erfindungsgemässe Vorrichtung 1 mit einer in Figur 1 gezeigten Bodenplatte 10 wiedergegeben. Die Vorrichtung 1 enthält ferner ein Probenrack 15 mit 25 als Öffnungen ausgebildeten Aufnahmen 4, von denen hier nur eine dargestellt ist. Jede dieser Aufnahmen 4 kann einen Probenbehälter 2 aufnehmen, wie beispielsweise ein Reagenzglas. Zur Vereinfachung der Darstellung ist auch nur ein einziger Probenbehälter 2 dargestellt. Am Probenbehälter 2 ist eine ringförmige Klammer 19 befestigt, welche an ihrem oberen Ende einen RFID-Tag 3 enthält und an ihrem unteren Ende einen Abstandring 20. Der RFID-Tag 3 enthält eine Identifizierung, bei der es sich beispielsweise um eine eindeutige Seriennummer handeln kann. Aufgrund der Anordnung des RFID-Tags 3 am Probenbehälter 2 ist diesem ebenfalls indirekt diese Identifizierung zugeordnet.

Der Probenbehälter 2 kann beispielsweise einen Durchmesser von D = 17 mm haben, der RFID-Tag 3 einen Aussendurchmesser von d = 21 mm und der Abstandsring 20 eine Höhe von h = 10 mm. Der Abstand von der Unterseite des RFID-Tags 3 zur Bodenplatte 10 kann a = 19 mm betragen. Es hat sich gezeigt, dass sich der RFID-Tag 3 mit diesen Dimensionen besonders gut auslesen lässt. Natürlich können diese Dimensionen auch anders gewählt werden, die der Fachmann durch Routineversuche bestimmen kann.

Jede der Aufnahmen 4 befindet sich oberhalb genau einer Leiterschleife der ersten Platine 8 und oberhalb genau einer Leiterschleife der zweiten Platine 9. Jeder Aufnahme 4 sind damit ein Wert der Koordinate x und ein Wert der Koordinate y zugeordnet. Diese Werte der Koordinaten kennzeichnen die Aufnahmen 4 eindeutig. Die Aufnahmen 4 sind damit in einem rechteckigen Raster mit fünf Zeilen und fünf Spalten angeordnet, wobei die Koordinate x die Spalte und die Koordinate y die Zeile in diesem Raster angibt.

Die Bodenplatte 10 enthält an ihrer Seite zehn Anpassnetzwerke mit Schaltern, welche die zehn Leseantennen 5ₓ₁, 5ₓ₂, 5ₓ₃, 5ₓ₄, 5ₓ₅, 5_{y1}, 5_{y2}, 5_{y3}, 5_{y4}, 5_{y4} an eine Sammelleitung anschliessbar machen, wobei diese Sammelleitung an den Anschluss 21 führt. Über diesen Anschluss 21 können die jeweiligen Leseantennen mit einer Leseeinrichtung verbunden werden, die zur Vereinfachung der Darstellung hier aber ebenfalls nicht gezeigt ist. Die Leseeinrichtung kann Teil der Vorrichtung 1 sein; alternativ kann es sich hierbei aber auch um ein externes Bauteil handeln. Vorteilhaft ist die Integration der Leseeinrichtung auf die Platine 8 oder 9. Durch Verbinden einer Leseantenne mit der Leseeinrichtung können diejenigen RFID-Tags 3 ausgelesen und identifiziert werden, welche oberhalb dieser Leseantenne angeordnet sind, d. h. zugeordnet sind. Dieses Verfahren wird weiter unten noch detaillierter erläutert.

In einem alternativen, hier nicht dargestellten Ausführungsbeispiel kann das Probenrack Aufnahmen enthalten, die in einem rechteckigen Raster mit 9 Zeilen und 7 Spalten angeordnet sind. In diesem alternativen Ausführungsbeispiel kann der Durchmesser der Probenbehälter 16 mm betragen. Das Gesamtmass kann 234 mm mal 182 mm betragen, wobei der Bereich der Platine für das Anpassnetzwerk und die Zuleitungen nicht berücksichtigt sind. Vorteilhaft ist es, wenn die Leiterschleifen möglichst nahe an die Aufnahmeöffnungen für den Probenbehälter angeordnet sind und der Abstand benachbarter Leseantennen möglichst gross gewählt wird. Dabei sollten aber bevorzugt auf einer gegebenen Fläche aus unter anderem wirtschaftlichen Gründen möglichst viele Probenbehälter Platz finden. Diese Dimensionen kann der Fachmann durch Berechnungen und Routineversuche ermitteln. Selbstverständlich können auch andere Dimensionen gewählt werden, mit denen die genannten Störungen verhindert werden können.

In Figur 4 ist eine zweite erfindungsgemässe Vorrichtung 1' dargestellt. Bei dieser Ausführungsform ist die Antennenplatte nicht als Bodenplatte ausgeführt, sondern als Lochplatte 11. Diese Lochplatte 11 enthält ein rechteckiges Raster von Löchern 12, welche in fünf Zeilen und fünf Spalten angeordnet sind. In jedes der Löcher 12 ist ein Probenbehälter 2 einsetzbar. Die Löcher 12 bilden daher einen Teil der Aufnahme 4. Die Lochplatte 11 ist also selbst Teil des Probenracks 15. Jedes der Löcher 12 ist von genau einer der Leseantennen 5ₓ₁, 5ₓ₂, 5ₓ₃, 5ₓ₄ und 5ₓ₅ der ersten Platine 8 und genau einer der Leseantennen 5_{y1}, 5_{y2}, 5_{y3}, 5_{y4} und 5_{y5} der zweiten Platine 9 umschlossen.

Alternativ zu den in den Figuren 3 und 4 dargestellten Ausführungsformen kann der RFID-Tag 3 natürlich auch an anderen Stellen des Probenbehälters 2 angeordnet sein, solange er von den Leseantennen auslesbar ist. Insbesondere kann er beispielsweise auch im Probenbehälter 2 eingegossen sein.

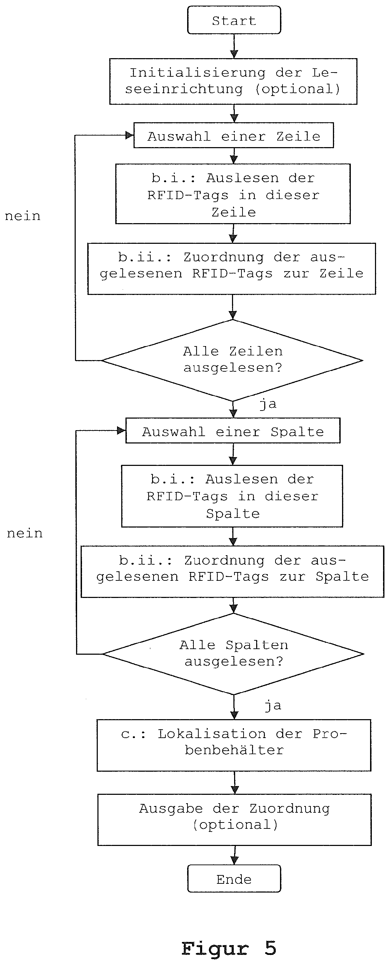

In Figur 5 ist ein Flussdiagramm dargestellt, anhand dessen eine Ausführungsform des erfindungsgemässen Verfahrens dargestellt wird. Zunächst werden ein oder mehrere Probenbehälter 2 mit jeweils mindestens einem RFID-Tag 3 gemäss Schritt a. in eine jeweilige Aufnahme 4 der Vorrichtung 1, 1' eingesetzt; dies ist in Figur 5 nicht dargestellt. Anschliessend wird optional die Leseeinrichtung initialisiert. Dies bedeutet, dass die Konfiguration der Leseeinrichtung entsprechend dem gewählten Standard, der Grösse des Probenracks (insbesondere der Anzahl der Zeilen und der Anzahl der Spalten), der Sendeleistung und den üblichen Softwareeinstellung vor dem Ablauf einer Steuerungsaufgabe erfolgt.

Daraufhin wird eine Zeile ausgewählt. Die Leseeinrichtung 6 wird mit der dieser Zeile zugeordneten Leseantenne 5_{y1}, 5_{y2}, 5_{y3}, 5_{y4}, 5_{y5} verbunden, und damit werden die RFID-Tags 3 in dieser Zeile ausgelesen und identifiziert. Dies kann beispielsweise gemäss dem Standard ISO 15693-3:2009 erfolgen. Anschliessend wird überprüft, ob bereits alle Zeilen gelesen wurden. Ist dies nicht der Fall, so wird eine weitere Zeile ausgewählt. Wenn alle Zeilen ausgelesen wurden, werden die RFID-Tags den einzelnen Zeilen zugeordnet.

In den darauf folgenden Schritten werden entsprechend die den Spalten zugeordneten Leseantennen 5ₓ₁, 5ₓ₂, 5ₓ₃, 5ₓ₄, 5ₓ₅ mit der Leseeinrichtung 6 verbunden, um die RFID-Tags 3 in den jeweiligen Spalten auszulesen und zu identifizieren (Schritt b.i.). Danach werden die RFID-Tags 3 den Spalten zugeordnet (Schritt b.ii.).

Schliesslich werden die identifizierten RFID-Tags 3 im Schritt c. den Aufnahmen 4 zugeordnet. Indirekt sind hierdurch dann auch die Probenbehälter 2 alle lokalisiert.

In einem anschliessenden optionalen Schritt kann die Zuordnung der RFID-Tags 3 zu den Aufnahmen 4 insbesondere grafisch ausgegeben werden, beispielsweise auf einem Monitor.

In Abwandlung des in Figur 5 dargestellten Flussdiagramms ist es natürlich auch möglich, zunächst die Spalten auszulesen und anschliessend die Zeilen. Alternativ kann beispielsweise auch erst die erste Zeile, dann die erste Spalte, anschliessend die zweite Zeile etc. ausgelesen werden.

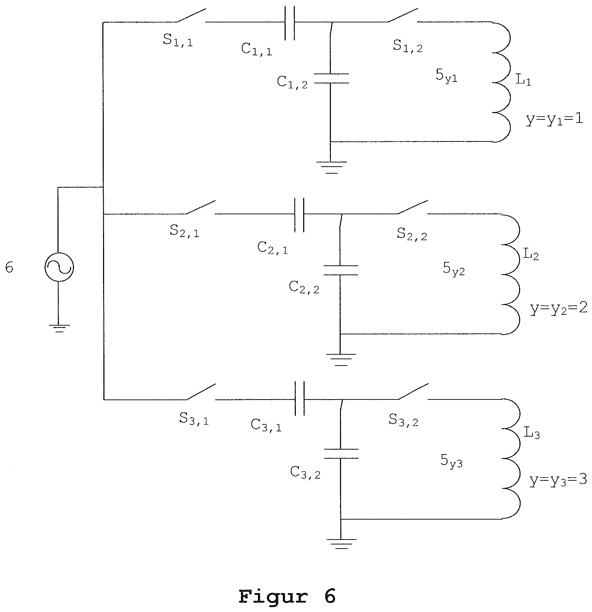

Zur Anpassung der Impedanz zwischen der Leseeinrichtung 6 und den Leseantennen kann ein Anpassnetzwerk verwendet werden. Der Schaltplan gemäss Figur 6 zeigt eine Leseeinrichtung 6, welche wahlweise mit drei Leseantennen 5_{y1}, 5_{y2} und 5_{y3} verbindbar ist. (Zur Vereinfachung der Darstellung werden hier im Gegensatz zu den obigen Ausführungsbeispielen nur drei Leseantennen verwendet; dem Fachmann ist jedoch unmittelbar klar, wie er dieses Beispiel an fünf Leseantennen anpassen kann.) Die Leseeinrichtung 6 ist bevorzugt auch über jeweilige Anpassnetzwerke mit drei Leseantennen 5ₓ₁, 5ₓ₂ und 5ₓ₃ verbindbar; dies ist jedoch ebenfalls zur Vereinfachung der Darstellung hier nicht gezeigt. Die Leseantennen 5_{y1}, 5_{y2} und 5_{y3} sind jeweils nur schematisch durch ihre Induktivitäten L₁, L₂ und L₃ dargestellt.

Mit Hilfe der Schalter S_{1,1}, S_{2,1} und S_{3,1} können die Leseantennen 5_{y1}, 5_{y2}, 5_{y3} wahlweise mit der Leseeinrichtung 6 verbunden werden. Im ersten, in Figur 6 oben dargestellten Anpassnetzwerk sind zwischen dem ersten Schalter S_{1,1} und der Leseantenne 5_{y1} ein erster Kondensator C_{1,1} und ein zweiter Schalter S_{1,2} in Serie geschaltet. Des Weiteren enthält das erste Anpassnetzwerk einen zweiten Kondensator C_{1,2}, welcher parallel zur Leseantenne 5_{y1} angeordnet ist. Der zweite Schalter S_{1,2} befindet sich dabei zwischen dem zweiten Kondensator C_{1,2} und der Leseantenne 5_{y1}. Die Funktionen der Schalter und Kondensatore wurden bereits oben erläutert. Der erste Schalter S_{1,1} und der zweite Schalter S_{1,2} werden bevorzugt synchron betätigt. Das zweite und das dritte Anpassnetzwerk enthalten entsprechende Kondensatoren und zweite Schalter. Hierdurch können Induktionsströme verhindert werden, die ansonsten von einer der Leseantennen in einer der jeweils anderen Leseantennen verursacht werden könnten.

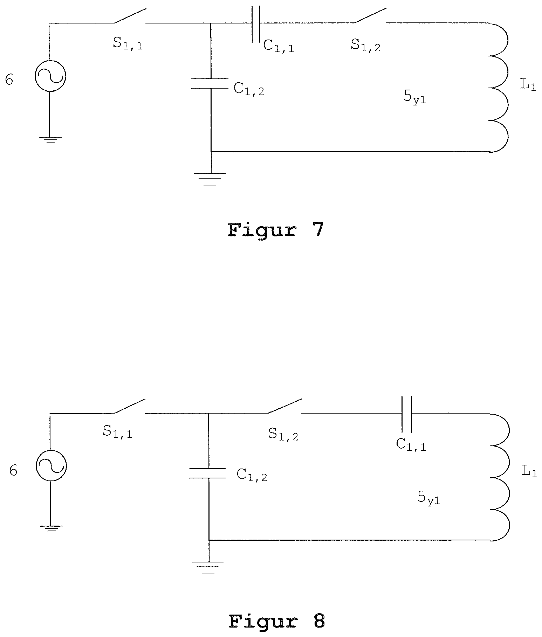

Figur 7 zeigt ein noch weiter bevorzugtes Anpassnetzwerk. Zur Vereinfachung der Darstellung ist dieses hier nur für eine einzige Leseantenne 5_{y1} gezeigt, welche wiederum nur durch ihre Induktivität L₁ charakterisiert ist. Gegenüber den Anpassnetzwerken von Figur 6 ist im Anpassnetzwerk gemäss Figur 7 die Position des in Serie angeordneten Kondensators C_{1,1} mit der Position des parallel angeordneten Kondensators C_{1,2} vertauscht; der zweite, parallel geschaltete Kondensator ist also zwischen der ersten, in Serie geschalteten Kondensator und der Leseantennen angeordnet.

Ein noch weiter bevorzugtes Anpassnetzwerk ist in Figur 8 dargestellt. Gegenüber dem Anpassnetzwerk in Figur 7 ist zusätzlich der Schalter S_{1,2} vor den ersten Kondensator C_{1,1} angeordnet. Hierdurch können hohe Spannungen am zweiten Schalter S_{1,2} verhindert werden, welche ansonsten dessen Funktionsfähigkeit beeinträchtigen könnten. Diese Vertauschungen haben jedoch bekanntlich keinen Einfluss auf die Funktion der Schaltung. Hierdurch können die an der Leseantenne herrschenden hohen Spannungen, welche als Folge der Güte des LC-Kreises entstehen, am zweiten Schalter S_{1,2} verringert werden. Der Schalter könnte ansonsten in seiner Funktionsfähigkeit beeinträchtigt werden, wenn die Spannung seine Versorgungsspannung überschreitet.

## Patentansprüche

1. Vorrichtung (1; 1') zur Identifikation und Lokalisation von Probenbehältern (2), welche mindestens einen RFID-Tag (3) aufweisen, umfassend
- mehrere Aufnahmen (4) zur Aufnahme jeweils eines Probenbehälters (2);
- mehrere Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}) zum Auslesen eines RFID-Tags (3) eines Probenbehälters (2), der in einer der Aufnahmen (4) aufgenommenen ist, wobei die Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}) wahlweise mit mindestens einer Leseeinrichtung (6) derart verbindbar sind, dass ein RFID-Tag (3) mittels der Leseeinrichtung (6) und dieser Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) auslesbar, identifizierbar und lokalisierbar ist;
wobei jeder Aufnahme (4) Werte (x1, x2, x3, x4, x5, y1, y2, y3, y4, y5) von mindestens zwei Koordinaten (x, y) zugeordnet sind, welche die Aufnahmen (4) eindeutig kennzeichnen;
**dadurch gekennzeichnet, dass**
mindestens einem Wert (x1, x2, x3, x4, x5, y1, y2, y3, y4, y5) einer der Koordinaten (x, y) genau eine Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) zugeordnet ist, mittels welcher die RFID-Tags (3) der Probenbehälter (2) der Aufnahmen (4) auslesbar sind, denen dieser Wert (x1, x2, x3, x4, x5, y1, y2, y3, y4, y5) dieser Koordinate (x, y) zugeordnet ist.

2. Vorrichtung (1; 1') gemäss dem vorangehenden Anspruch,
**dadurch gekennzeichnet, dass**
jedem Wert (x1, x2, x3, x4, x5, y1, y2, y3, y4, y5) jeder der Koordinaten (x, y) genau eine Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) zugeordnet ist, mittels welcher die RFID-Tags (3) der Probenbehälter (2) der Aufnahmen (4) auslesbar sind, denen dieser Wert (x1, x2, x3, x4, x5, y1, y2, y3, y4, y5) dieser Koordinate (x, y) zugeordnet ist.

3. Vorrichtung (1; 1') gemäss einem der vorangehenden Ansprüche,
**dadurch gekennzeichnet, dass**
die Aufnahmen (4) in einem im Wesentlichen rechteckigen Raster angeordnet sind und eine erste Koordinate (x) die Spalte und eine zweite Koordinate (y) die Zeile in diesem Raster angibt.

4. Vorrichtung (1; 1') gemäss einem der vorangehenden Ansprüche,
**dadurch gekennzeichnet, dass**
mindestens eine, bevorzugt mehrere, besonders bevorzugt alle Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}) mehrere in Serie geschaltete Leiterschleifen (7, 7', 7", 7'", 7"") aufweisen, wobei jede Leiterschleife (7, 7', 7", 7"', 7"") einer Aufnahme (4) zugeordnet ist.

5. Vorrichtung (1; 1') gemäss einem der vorangehenden Ansprüche,
**dadurch gekennzeichnet, dass**
die einer ersten Koordinate (x) zugeordneten Leseantennen (5ₓ₁, 5ₓ₂, 5ₓ₃, 5ₓ₄, 5ₓ₅) im Wesentlichen in einer ersten Ebene (E₁) der Vorrichtung (1; 1') angeordnet sind und die einer zweiten Koordinate (y) zugeordneten Leseantennen (5_{y1}, 5_{y2}, 5_{y3}, 5_{y4}, 5_{y5}) im Wesentlichen in einer zweiten Ebene (E₂) der Vorrichtung (1; 1') angeordnet sind, welche im Wesentlichen parallel zur ersten Ebene (E₁) verläuft, wobei insbesondere die erste Ebene (E₁) in einer ersten Platine (8) verläuft und die zweite Ebene (E₂) in einer zweiten Platine (9) verläuft oder die erste Ebene (E₁) auf einer Oberseite einer Platine verläuft und die zweite Ebene (E₂) auf einer Unterseite dieser Platine.

6. Vorrichtung (1; 1') gemäss einem der vorangehenden Ansprüche,
**dadurch gekennzeichnet, dass**
zumindest eine Leseantenne (5ₓ₁, 5_{X2}, 5ₓ₃, 5ₓ₄, 5ₓ₅, 5_{y1}, 5_{y2}, 5_{y3}, 5_{y4}, 5_{y5}), bevorzugt alle Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}), in einer Bodenplatte (10) angeordnet sind, welche unterhalb der Aufnahmen (4) angeordnet ist.

7. Vorrichtung (1; 1') gemäss einem der vorangehenden Ansprüche,
**dadurch gekennzeichnet, dass**
zumindest eine Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}), bevorzugt alle Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}), in einer Lochplatte (11) angeordnet sind, welche mehrere Löcher aufweist, die jeweils zumindest einen Teil der Aufnahme (4) bilden und in welche jeweils ein Probenbehälter (2) einsetzbar ist.

8. Vorrichtung (1; 1') mit den Merkmalen der Ansprüche 4 und 7,
**dadurch gekennzeichnet, dass**
mindestens eine, bevorzugt alle Leiterschleifen (7, 7', 7", 7"', 7"") jeweils eines der Löcher umschliessen.

9. Vorrichtung (1; 1') gemäss einem der vorangehenden Ansprüche,
**dadurch gekennzeichnet, dass**
die Leseeinrichtung (6) mit mindestens einer, bevorzugt mit jeder Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) über ein jeweiliges Anpassnetzwerk verbunden oder verbindbar ist, wobei das Anpassnetzwerk enthält:
- einen ersten Kondensator (C_{1,1}, C_{2,1}, C_{3,1}), welcher in Serie zwischen der Leseeinrichtung (6) und der Leseantenne (5ₓ₁, 5ₓ₂, 5ₓ₃, 5_{y1}, 5_{y2}, 5_{y3}) angeordnet ist, und
- einen zweiten Kondensator (C_{1,2}, C_{2,2}, C_{3,2}), welcher parallel zur Leseeinrichtung (6) und zur Leseantenne (5ₓ₁, 5ₓ₂, 5ₓ₃, 5_{y1}, 5_{y2}, 5_{y3}) angeordnet ist.

10. System zur Identifikation und Lokalisation von Probenbehältern (2), welche mindestens einen RFID-Tag (3) aufweisen, umfassend
- mindestens eine Vorrichtung (1; 1') gemäss einem der vorangehenden Ansprüche;
- mindestens einen Probenbehälter (2), welcher mindestens einen RFID-Tag (3) aufweist und derart in einer Aufnahme (4) der Vorrichtung (1; 1') aufnehmbar ist, dass der RFID-Tag (3) mittels der Leseeinrichtung (6) und mindestens einer der Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}) auslesbar, identifizierbar und lokalisierbar ist.

11. Verfahren zur Identifikation und Lokalisation von Probenbehältern (2), welche mindestens einen RFID-Tag (3) aufweisen, unter Verwendung einer Vorrichtung (1; 1') gemäss einem der Ansprüche 1 bis 9 oder eines Systems gemäss Anspruch 10, enthaltend die folgenden Schritte:
a. Bereitstellung mindestens eines Probenbehälters (2), welcher mindestens einen RFID-Tag (3) aufweist, in eine Aufnahme (4) der Vorrichtung (1; 1');
b. sequenzielle Verbindung der Leseeinrichtung (6) mit jeder Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) und jeweils
b.i. mittels der Leseeinrichtung (6) und dieser Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}): Auslesen und Identifizieren derjenigen RFID-Tags (3), welche dieser Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) zugeordnet sind;
b.ii. Zuordnung der Identifizierungen dieser RFID-Tags (3) zu dem Wert (x1, x2, x3, x4, x5, y1, y2, y3, y4, y5) der Koordinate (x, y), dem diese Leseantenne (5ₓ₁, 5ₓ₂, 5ₓ₃, 5ₓ₄, 5ₓ₅, 5_{y1}, 5_{y2}, 5_{y3}, 5_{y4}, 5_{y5}) zugeordnet ist;
c. Lokalisation mindestens eines der Probenbehälter (2) durch Bestimmung der Werte (x1, x2, x3, x4, x5, y1, y2, y3, y4, y5) der Koordinaten (x, y), denen die Identifizierung der RFID-Tags (3) des Probenbehälters (2) zugeordnet wurde.

12. Verfahren gemäss Anspruch 11,
**dadurch gekennzeichnet, dass**
das Auslesen und Identifizieren der RFID-Tags (3) im Schritt b.i. unter Verwendung eines Antikollisionsmechanismus durchgeführt wird, insbesondere gemäss dem Standard ISO/IEC-15693-3:2009 und/oder gemäss dem Modus 3 des Standards ISO/IEC 18000-3:2010 und/oder nach EPC™ Radio-Frequency Identity Protocols Class-1 Generation-2 UHF RFID Protocol for Communications at 860 MHz - 960 MHz Version 1.0.9:2005.

13. Verfahren zum Umrüsten und/oder Aufrüsten einer Vorrichtung, welche mehrere Aufnahmen (4) zur Aufnahme jeweils eines Probenbehälters (2) umfasst, enthaltend einen Schritt, in dem die Vorrichtung derart mit mehreren Leseantennen (5ₓ₁, 5ₓ₂, 5ₓ₃, 5ₓ₄, 5ₓ₅, 5_{y1}, 5_{y2}, 5_{y3}, 5_{y4}, 5_{y5}) zum Auslesen eines RFID-Tags (3) eines Probenbehälters (2) ausgestattet wird, dass sich eine Vorrichtung (1; 1') gemäss einem der Ansprüche 1 bis 9 ergibt.

14. Computerprogramm, welches zur Durchführung eines Verfahrens gemäss einem der Ansprüche 11 und 12 ausgebildet ist, wenn es von einer Vorrichtung (1; 1') gemäss einem der Ansprüche 1 bis 9 durchgeführt wird, insbesondere von der Leseeinrichtung (6) der Vorrichtung (1; 1').

15. Datenträger, enthaltend ein Computerprogramm gemäss Anspruch 14.

## Claims

1. Apparatus (1; 1') for identifying and locating sample containers (2) having at least one RFID tag (3), comprising
- multiple holders (4) for holding one sample container (2) each;
- multiple read antennas (5ₓ₁, 5ₓ₂, 5ₓ₃, 5ₓ₄, 5ₓ₅, 5_{y1}, 5_{y2}, 5_{y3}, 5_{y4}, 5_{y5}) for reading an RFID tag (3) of a sample container (2) held in one of the holders (4), wherein the read antennas (5ₓ₁, 5ₓ₂, 5ₓ₃, 5ₓ₄, 5ₓ₅, 5_{y1}, 5_{y2}, 5_{y3}, 5_{y4}, 5_{y5}) are selectively connectable to at least one reading device (6) such that an RFID tag (3) is readable, identifiable and locatable by means of the reading device (6) and this read antenna (5ₓ₁, 5ₓ₂, 5ₓ₃, 5ₓ₄, 5ₓ₅, 5_{y1}, 5_{y2}, 5_{y3}, 5_{y4}, 5_{y5}) ;
wherein each holder (4) has associated values (x1, x2, x3, x4, x5, y1, y2, y3, y4, y5) of at least two coordinates (x, y) that explicitly denote the holders (4);
**characterized in that**
at least one value (x1, x2, x3, x4, x5, y1, y2, y3, y4, y5) of one of the coordinates (x, y) has precisely one associated read antenna (5ₓ₁, 5ₓ₂, 5ₓ₃, 5ₓ₄, 5ₓ₅, 5_{y1}, 5_{y2}, 5_{y3}, 5_{y4}, 5_{y5}) by means of which the RFID tags (3) of the sample containers (2) of the holders (4) with which this value (x1, x2, x3, x4, x5, y1, y2, y3, y4, y5) of this coordinate (x, y) is associated are readable.

2. Apparatus (1; 1') according to the preceding claim,
**characterized in that**
each value (x1, x2, x3, x4, x5, y1, y2, y3, y4, y5) of each of the coordinates (x, y) has precisely one associated read antenna (5ₓ₁, 5ₓ₂, 5ₓ₃, 5ₓ₄, 5ₓ₅, 5_{y1}, 5_{y2}, 5_{y3}, 5_{y4}, 5_{y5}) by means of which the RFID tags (3) of the sample containers (2) of the holders (4) with which this value (x1, x2, x3, x4, x5, y1, y2, y3, y4, y5) of this coordinate (x, y) is associated are readable.

3. Apparatus (1; 1') according to either of the preceding claims,
**characterized in that**
the holders (4) are arranged in a substantially rectangular grid and a first coordinate (x) indicates the column and a second coordinate (y) indicates the row in this grid.

4. Apparatus (1; 1') according to one of the preceding claims,
**characterized in that**
at least one, preferably multiple, particularly preferably all, read antenna (s) (5ₓ₁, 5ₓ₂, 5ₓ₃, 5ₓ₄, 5ₓ₅, 5_{y1}, 5_{y2}, 5_{y3}, 5_{y4}, 5_{y5}) has (have) multiple series-connected conductor loops (7, 7', 7", 7"', 7""), wherein each conductor loop (7, 7', 7", 7"', 7"") is associated with a holder (4).

5. Apparatus (1; 1') according to one of the preceding claims,
**characterized in that**
the read antennas (5ₓ₁, 5ₓ₂, 5ₓ₃, 5ₓ₄, 5ₓ₅) associated with a first coordinate (x) are substantially arranged in a first plane (E₁) of the apparatus (1; 1') and the read antennas (5_{y1}, 5_{y2}, 5_{y3}, 5_{y4}, 5_{y5}) associated with a second coordinate (y) are substantially arranged in a second plane (E₂) of the apparatus (1; 1'), which runs substantially parallel to the first plane (E₁), wherein in particular the first plane (E₁) runs in a first circuit board (8) and the second plane (E₂) runs in a second circuit board (9) or the first plane (E₁) runs on a top of a circuit board and the second plane (E₂) runs on a bottom of this circuit board.

6. Apparatus (1; 1') according to one of the preceding claims,
**characterized in that**
at least one read antenna (5ₓ₁, 5ₓ₂, 5ₓ₃, 5ₓ₄, 5ₓ₅, 5_{y1}, 5_{y2}, 5_{y3}, 5_{y4}, 5_{y5}), preferably all read antennas (5ₓ₁, 5ₓ₂, 5ₓ₃, 5ₓ₄, 5ₓ₅, 5_{y1}, 5_{y2}, 5_{y3}, 5_{y4}, 5_{y5}), is(are) arranged in a baseplate (10) arranged beneath the holders (4).

7. Apparatus (1; 1') according to one of the preceding claims,
**characterized in that**
at least one read antenna (5ₓ₁, 5ₓ₂, 5ₓ₃, 5ₓ₄, 5ₓ₅, 5_{y1}, 5_{y2}, 5_{y3}, 5_{y4}, 5_{y5}), preferably all read antennas (5ₓ₁, 5ₓ₂, 5ₓ₃, 5ₓ₄, 5ₓ₅, 5_{y1}, 5_{y2}, 5_{y3}, 5_{y4}, 5_{y5}), is(are) arranged in a perforated plate (11) having multiple holes that each form at least part of the holder (4) and into each of which one sample container (2) is insertable.

8. Apparatus (1; 1') having the features of Claims 4 and 7,
**characterized in that**
at least one, preferably all, conductor loop(s) (7, 7', 7", 7"', 7"") enclose (s) a respective one of the holes.

9. Apparatus (1; 1') according to one of the preceding claims,
**characterized in that**
the reading device (6) is connected or connectable to at least one, preferably to each, read antenna (5ₓ₁, 5ₓ₂, 5ₓ₃, 5ₓ₄, 5ₓ₅, 5_{y1}, 5_{y2}, 5_{y3}, 5_{y4}, 5_{y5}) via a respective matching network, wherein the matching network contains:
- a first capacitor (C_{1,1}, C_{2,1}, C_{3,1}) arranged in series between the reading device (6) and the read antenna (5ₓ₁, 5ₓ₂, 5ₓ₃, 5_{y1}, 5_{y2}, 5_{y3}), and
- a second capacitor (C_{1,2}, C_{2,2}, C_{3,2})arranged in parallel with the reading device (6) and with the read antenna (5ₓ₁, 5ₓ₂, 5ₓ₃, 5_{y1}, 5_{y2}, 5_{y3}).

10. System for identifying and locating sample containers (2) having at least one RFID tag (3), comprising
- at least one apparatus (1; 1') according to one of the preceding claims;
- at least one sample container (2) having at least one RFID tag (3) and holdable in a holder (4) of the apparatus (1; 1') such that the RFID tag (3) is readable, identifiable and locatable by means of the reading device (6) and at least one of the read antennas (5ₓ₁, 5ₓ₂, 5ₓ₃, 5ₓ₄, 5ₓ₅, 5_{y1}, 5_{y2}, 5_{y3}, 5_{y4}, 5_{y5}).

11. Method for identifying and locating sample containers (2) having at least one RFID tag (3) using an apparatus (1; 1') according to one of Claims 1 to 9 or a system according to Claim 10, containing the following steps:
a. provision of at least one sample container (2) having at least one RFID tag (3) in a holder (4) of the apparatus (1; 1');
b. sequential connection of the reading device (6) to each read antenna (5ₓ₁, 5ₓ₂, 5ₓ₃, 5ₓ₄, 5ₓ₅, 5_{y1}, 5_{y2}, 5_{y3}, 5_{y4}, 5_{y5}) and, in each case,
b.i. by means of the reading device (6) and this read antenna (5ₓ₁, 5ₓ₂, 5ₓ₃, 5ₓ₄, 5ₓ₅, 5_{y1}, 5_{y2}, 5_{y3}, 5_{y4}, 5_{y5}) : reading and identifying those RFID tags (3) that are associated with this read antenna (5ₓ₁, 5ₓ₂, 5ₓ₃, 5ₓ₄, 5ₓ₅, 5_{y1}, 5_{y2}, 5_{y3}, 5_{y4}, 5_{y5}) ;
b.ii. association of the identifications of these RFID tags (3) with the value (x1, x2, x3, x4, x5, y1, y2, y3, y4, y5) of the coordinate (x, y) with which this read antenna (5ₓ₁, 5ₓ₂, 5ₓ₃, 5ₓ₄, 5ₓ₅, 5_{y1}, 5_{y2}, 5_{y3}, 5_{y4}, 5_{y5}) is associated;
c. location of at least one of the sample containers (2) by means of determination of the values (x1, x2, x3, x4, x5, y1, y2, y3, y4, y5) of the coordinates (x, y) with which the identification of the RFID tags (3) of the sample container (2) was associated.

12. Method according to Claim 11,
**characterized in that**
the reading and identifying of the RFID tags (3) in step b.1. is performed using an anticollision mechanism, in particular according to the ISO/IEC 15693-3;2009 standard and/or according to mode 3 of the ISO/IEC 18000-3:2010 standard and/or according to EPC™ Radio-Frequency Identity Protocols Class-1 Generation-2 UHF RFID Protocol for Communications at 860 MHz - 960 MHz version 1.0.9: 2005.

13. Method for converting and/or upgrading an apparatus comprising multiple holders (4) for holding one sample container (2) each, containing a step in which the apparatus is equipped with multiple read antennas (5ₓ₁, 5ₓ₂, 5ₓ₃, 5ₓ₄, 5ₓ₅, 5_{y1}, 5_{y2}, 5_{y3}, 5_{y4}, 5_{y5}) for reading an RFID tag (3) of a sample container (2) such that an apparatus (1; 1') according to one of Claims 1 to 9 is obtained.

14. Computer program configured for performing a method according to either of Claims 11 and 12 when it is performed by an apparatus (1; 1') according to one of Claims 1 to 9, in particular by the reading device (6) of the apparatus (1; 1').

15. Data storage medium, containing a computer program according to Claim 14.

## Revendications

1. Dispositif (1 ; 1') pour l'identification et la localisation de récipients d'échantillons (2) comportant au moins une étiquette RFID (3), comprenant
- plusieurs admissions (4) pour l'admission d'un récipient d'échantillon (2) respectivement ;
- plusieurs antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}) pour la lecture d'une étiquette RFID (3) d'un récipient d'échantillon (2) admis dans l'une des admissions (4), les antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}) pouvant être reliées sélectivement à au moins un dispositif de lecture (6), de telle façon qu'une étiquette RFID (3) peut être lue, identifiée et localisée au moyen du dispositif de lecture (6) et de cette antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) ;
dans lequel des valeurs (x1, x2, x3, x4, x5, y1, y2, y3, y4, y5) d'au moins deux coordonnées (x, y) sont attribuées à chaque admission (4), lesquelles caractérisent les admissions (4) de façon univoque ;
**caractérisé en ce que**
une antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) précisément est attribuée à au moins une valeur (x1, x2, x3, x4, x5, y1, y2, y3, y4, y5) de l'une des coordonnées (x, y), au moyen de laquelle les étiquettes RFID (3) des récipients d'échantillon (2) des admissions (4) auxquelles est attribuée cette valeur (x1, x2, x3, x4, x5, y1, y2, y3, y4, y5) de cette coordonnée (x, y) peuvent être lues.

2. Dispositif (1 ; 1') selon la revendication précédente,
**caractérisé en ce que**
une antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) précisément est attribuée à chaque valeur (x1, x2, x3, x4, x5, y1, y2, y3, y4, y5) de chacune des coordonnées (x, y), au moyen de laquelle les étiquettes RFID (3) des récipients d'échantillon (2) des admissions (4) auxquelles cette valeur (x1, x2, x3, x4, x5, y1, y2, y3, y4, y5) de cette coordonnée (x, y) est attribuée peuvent être lues.

3. Dispositif (1 ; 1') selon l'une des revendications précédentes,
**caractérisé en ce que**
les admissions (4) sont disposées dans une matrice essentiellement rectangulaire et une première coordonnée (x) indique la colonne et une deuxième coordonnée (y) indique la ligne dans cette matrice.

4. Dispositif (1 ; 1') selon l'une des revendications précédentes,
**caractérisé en ce que**
au moins une, de préférence plusieurs, de façon particulièrement préférentielle toutes les antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}) comportent plusieurs boucles conductrices (7, 7', 7", 7"', 7""), chacune des boucles conductrices (7, 7', 7", 7"', 7"") étant attribuée à une admission (4).

5. Dispositif (1, 1') selon l'une des revendications précédentes,
**caractérisé en ce que**
les antennes de lecture (5ₓ₁, 5ₓ₂, 5ₓ₃, 5ₓ₄, 5ₓ₅) attribuées à une première coordonnée (x) sont disposées essentiellement dans un premier plan (E₁) du dispositif (1, 1') et les antennes de lecture (5_{y1}, 5_{y2}, 5_{y3}, 5_{y4}, 5_{y5}) attribuées à une deuxième coordonnée (y) sont disposées essentiellement dans un deuxième plan (E₂) du dispositif (1, 1'), lequel s'étend essentiellement parallèlement au premier plan (E₁), dans lequel le premier plan (E₁) s'étend en particulier dans une première platine (8) et le deuxième plan (E₂) s'étend dans une deuxième platine (9), ou dans lequel le premier plan (E₁) s'étend sur une surface supérieure d'une platine et le deuxième plan (E₂) s'étend sur une surface inférieure de cette platine.

6. Dispositif (1 ; 1') selon l'une des revendications précédentes,
**caractérisé en ce que**
au moins une antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}), de préférence toutes les antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}), sont disposées dans une plaque de fond (10) disposée sous les admissions (4).

7. Dispositif (1 ; 1') selon l'une des revendications précédentes,
**caractérisé en ce que**
au moins une antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}), de préférence toutes les antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}) sont disposées dans une plaque perforée (11) présentant plusieurs trous formant respectivement au moins une partie de l'admission (4) et dans lesquels un récipient d'échantillon (2) peut être inséré respectivement.

8. Dispositif (1 ; 1') comprenant les caractéristiques des revendications 4 et 7, **caractérisé en ce que**
au moins une, de préférence toutes les boucles conductrices (7, 7', 7", 7"', 7"") entourent respectivement l'un des trous.

9. Dispositif (1 ; 1') selon l'une des revendications précédentes,
**caractérisé en ce que**
le dispositif de lecture (6) est relié ou peut être relié à au moins une, de préférence à chaque antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) par le biais d'un réseau d'adaptation respectif, le réseau d'adaptation comprenant :
- un premier condensateur (C_{1,1}, C_{2,1}, C_{3,1}) disposé en série entre le dispositif de lecture (6) et l'antenne de lecture (5ₓ₁, 5ₓ₂, 5ₓ₃, 5_{y1}, 5_{y2}, 5_{y3}), et
- un deuxième condensateur (C_{1,2}, C_{2,2}, C_{3,2})disposé parallèlement au dispositif de lecture (6) et à l'antenne de lecture (5ₓ₁, 5ₓ₂, 5ₓ₃, 5_{y1}, 5_{y2}, 5_{y3}).

10. Système pour l'identification et la localisation de récipients d'échantillon (2) comportant au moins une étiquette RFID (3), comprenant
- au moins un dispositif (1 ; 1') selon l'une des revendications précédentes ;
- au moins un récipient d'échantillon (2) présentant au moins une étiquette RFID (3) et pouvant être admis de telle façon dans une admission (4) du dispositif (1 ; 1') que l'étiquette RFID (3) peut être lue, identifiée et localisée au moyen du dispositif de lecture (6) et d'au moins l'une des antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}).

11. Procédé pour l'identification et la localisation de récipients d'échantillon (2) présentant au moins une étiquette RFID (3), à l'aide d'un dispositif (1 ; 1') selon l'une des revendications 1 à 9 ou du système selon la revendication 10, comprenant les étapes suivantes :
a. mise à disposition d'au moins un récipient d'échantillon (2) présentant au moins une étiquette RFID (3), dans une admission (4) du dispositif (1 ; 1') ;
b. liaison séquentielle du dispositif de lecture (6) avec chaque antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) et respectivement
b.i. au moyen du dispositif de lecture (6) et de cette antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5}) : lecture et identification des étiquettes RFID (3) attribuées à cette antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5});
b.ii. attribution des identifications de ces étiquettes RFID (3) à la valeur (x1, x2, x3, x4, x5, y1, y2, y3, y4, y5) des coordonnées (x, y) à laquelle est attribuée cette antenne de lecture (5ₓ₁, 5ₓ₂, 5ₓ₃, 5ₓ₄, 5ₓ₅, 5_{y1}, 5_{y2}, 5_{y3}, 5_{y4}, 5_{y5});
c. localisation d'au moins un récipient d'échantillon (2) par détermination des valeurs (x1, x2, x3, x4, x5, y1, y2, y3, y4, y5) des coordonnées (x, y) auxquelles a été attribuée l'identification des étiquettes RFID (3) du récipient d'échantillon (2) .

12. Procédé selon la revendication 11,
**caractérisé en ce que**
la lecture et l'identification des étiquettes RFID (3) dans l'étape b.i. est réalisée à l'aide d'un mécanisme anti-collision, en particulier conformément à la norme ISO/IEC-15693-3:2009 et/ou conformément au mode 3 de la norme ISO/IEC 18000-3:2010 et/ou conformément au Protocole d'identité de fréquence radio EPC™ classe 1 génération 2 UHF RFID Protocol for Communications à 860 MHz - 960 MHz Version 1.0.9:2005.

13. Procédé pour la modification et/ou l'amélioration d'un dispositif comprenant plusieurs admission (4) pour l'admission d'un récipient d'échantillon (2) respectivement, comprenant une étape dans laquelle le dispositif est équipé de plusieurs antennes de lecture (5ₓ₁, 5ₓ₂, 5ₓ₃, 5ₓ₄, 5ₓ₅, 5_{y1}, 5_{y2}, 5_{y3}, 5_{y4}, 5_{y5}) pour la lecture d'une étiquette RFID (3) d'un récipient d'échantillon (2), de manière à obtenir un dispositif (1 ; 1') selon l'une des revendications 1 à 9.

14. Programme informatique conçu pour l'exécution d'un procédé selon l'une des revendications 11 et 12, lorsqu'il est exécuté par un dispositif (1 ; 1') selon l'une des revendications 1 à 9, en particulier par un dispositif de lecture (6) du dispositif (1 ; 1').

15. Support de données comprenant un programme informatique selon la revendication 14.
